# EUROPÄISCHE PATENTANMELDUNG

(11) **EP 2 177 136 A1**
(43) Veröffentlichungstag der Anmeldung: **21.04.2010**
(21) Anmeldenummer: 08105598.0
(22) Anmeldetag: 17.10.2008
(51) Int. Cl.: A47J 31/36

(54) **Vorrichtung und Anordnung zum Zubereiten eines flüssigen Lebens- oder Genussmittels**

(71) Anmelder: Delica AG, 4127 Birsfelden (CH)
(72) Erfinder: Deuber, Louis, 8805, Richterswil (CH)
(74) Vertreter: Wenger, René

(57) **Zusammenfassung**

Eine Vorrichtung zum Zubereiten eines flüssigen Genussmittels mit einer mit einem einen umlaufenden Kragen (3) versehenen Kapsel (2) weist zwei zur Aufnahme der Kapsel dichtend gegeneinander pressbaren Kammerteilen (5,6) auf, die horizontal relativ zueinander bewegbar sind. Weiterhin weist eine Positioniereinheit (4) auf einer vertikalen Ebene liegende Führungsmittel zum Führen der Kapsel an ihrem Kragen (3) auf. Die Kapsel (2) ist in der Offenstellung mittels der Positioniereinheit (4) in einer Zwischenposition zwischen den Kammerteilen (5,6) haltbar, wobei die Führungsmittel zwei sich verjüngende Wandabschnitte (10) aufweisen, zwischen denen der Kragen (3) an einem Aussenumfang in der Zwischenposition in einem Positionierbereich (10") klemmend erfassbar ist. Zum Befreien des Kragens vor dem Erreichen der Schliessposition ist die Positioniereinheit (4) derart ausgebildet, dass der Kragen (3) bezogen auf die Bewegungsrichtung (z) der Kammerteile (5,6) wenigstens auf einer Seite freiliegt.

## Beschreibung

Die Erfindung betrifft eine Vorrichtung zum Zubereiten eines flüssigen Lebens- oder Genussmittels aus einer in einer Kapsel enthaltenen Substanz gemäss dem Oberbegriff von Anspruch 1. Weiterhin betrifft die Erfindung eine Anordnung mit einer derartigen Vorrichtung und einer Kapsel. Die Kapseln weisen dabei einen umlaufenden Kragen auf, der mittels einer Positioniereinheit in die Vorrichtung einführbar und darin positionierbar ist. Mit den Kapseln lassen sich Trockensubstanzen oder allenfalls auch andere Verpackungsgüter auf vorteilhafte Art und Weise abpacken. Die Vorrichtungen haben sich vor allem für die Zubereitung von Getränken wie z.B. Kaffee, Tee oder Kakao durchgesetzt.

Portionsverpackungen zum Zubereiten von flüssigen Lebens- oder Genussmitteln sind seit längerer Zeit bekannt und gebräuchlich. Aus der EP 1 101 430 oder EP 1 344 722 sind beispielsweise vergleichbare Kapseln bekannt geworden. Die Kapseln verfügen dabei über einen Grundkörper mit einem vorzugsweise rotationssymmetrisch ausgebildeten Aufnahmebecher und einem daran sich anschliessenden umlaufenden, flanschartigen Kragen. Der Aufnahmebecher ist zum hermetischen Verpacken des Verpackungsguts mit einer Folie verschlossen, die am Kragen beispielsweise verschweisst oder je nach Material auf andere Weise befestigt ist.

Eine Vorrichtung, mit der das in solchen Kapsel enthaltene Extraktionsgut extrahierbar ist, beschreibt beispielsweise die WO 2007/017455. Die Vorrichtung enthält ein schwenkbares Kammerteil, das eine Kavität zur Aufnahme der Kapsel aufweist. Zum einfachen Handhaben der Kapsel für einen Konsumenten ist das Kammerteil in einer Einlegeposition vertikal und in einer Schliess- bzw. Extraktionsposition horizontal ausgerichtet.

Sodann sind Vorrichtungen bekannt geworden, bei denen die Kammerteile lediglich translatorische Bewegungen vollführen. Eine derartige Vorrichtung zeigt etwa die EP 1 757 212 A2. Hier ist eine gattungsmässig vergleichbare Vorrichtung beschrieben, die zwei auf einer horizontalen Achse relativ zueinander bewegbare Kammerteile aufweist. Die Kapsel wird über seitlich angeordnete Führungs- und Sperrmittel unter Schwerkrafteinwirkung in eine Zwischenposition eingelegt. Zum Erstellen einer Extraktionsposition werden die Sperrmittel beim Überfahren des beweglichen Kammerteils zur Seite gestossen, wodurch die Kapsel von den Sperrmitteln befreit wird. Der Mechanismus zum Sperren und Befreien der Kapsel von den Sperrmitteln ist vergleichsweise komplex und benötigt spezielle Bauteile.

Es ist daher eine Aufgabe der Erfindung, eine Vorrichtung der eingangs genannten Art zu schaffen, die hinsichtlich Funktionalität und Aufbau vereinfacht ist. Die Vorrichtung soll weiter einfach hergestellt werden können. Sodann soll sich die Vorrichtung insbesondere für Kapseln mit einem Aufnahmebecher und einem daran angeformten umlaufenden Kragen eignen. Diese Aufgaben werden erfindungsgemäss mit einer Vorrichtung gelöst, welche die Merkmale in Anspruch 1 aufweist.

Dadurch, dass die Führungsmittel zwei sich verjüngende Wandabschnitte aufweisen, zwischen denen der Kragen an einem Aussenumfang in der Zwischenposition in einem Positionierbereich klemmend erfassbar ist, kann eine einfache und vorteilhafte Positionierung der Kapsel zwischen den Kammerteilen für die Zwischenposition erreicht werden. Die Positioniereinheit ist derart ausgebildet, dass der Kragen bezogen auf die Bewegungsrichtung der Kammerteile wenigstens auf einer Seite frei liegt. Diese Anordnung stellt sicher, dass der Kragen von der Positioniereinheit einfach befreibar ist. Somit kann die Kapsel beim Bewegen der Kammerteile von der Offenstellung in die Schliessposition ohne Verformung des Kragens aus der Zwischenposition von der Positioniereinheit befreit werden. Die Kammerteile sind bevorzugt translatorisch bewegbar, wobei diese Bewegungsrichtung eine axiale Richtung der Vorrichtung vorgibt.

Die Kapsel kann eine in Bezug auf eine Kapselachse einen etwa rotationssymmetrisch ausgebildeten Aufnahmebecher aufweisen, an dem ein umlaufender Kragen angeformt ist. Zum hermetischen Verschliessen des Verpackungsguts im Aufnahmebecher kann am Kragen ein folienartiges Deckenteil angebracht sein. Insbesondere für derartige Kapseln kann es vorteilhaft sein, wenn die Positioniereinheit und die Kammerteile derart in der Vorrichtung angeordnet sind, dass sowohl die Bewegungsrichtung der Kammerteile als auch die Kapselachse wenigstens in der Zwischenposition, jedoch auch in einer Schliessposition oder Extraktionsposition, etwa horizontal verlaufen.

Die Führungsmittel können vertikal ausgerichtet sein. Die Kapsel kann so zum Erreichen der Zwischenposition vorzugsweise durch Schwerkraft in die Positioniereinheit einführbar sein. Ein Hineindrücken der Kapsel ist nicht erforderlich. Die Positioniereinheit ist vorzugsweise derart ausgebildet, dass die Kapsel in der Zwischenposition etwa genau auf die später einzunehmende Extraktionsposition ausgerichtet ist. In der Extraktionsposition befindet sich die Kapsel, wenn die Kammerteile sich in einer vorzugsweise dichtenden Schliessposition befinden und die Portionsverpackung in der Kammer einschliessen.

In einer ersten Ausführungsform kann die Positioniereinheit einen Einführbereich aufweisen, in dem die Kapsel vor dem Erreichen der Zwischenposition an einem Kragen in einander zugewandten U-förmigen Nuten geführt ist. Die Nuten können je einen Nutboden und Nutseitenwände aufweisen, wobei die Nutseitenwände den Kragen beim Einführvorgang jeweils seitlich führen. Die Nutböden können dabei die vorgenannten, sich verjüngenden Wandabschnitte bilden. Die einander zugewandten Nutböden (bzw. Wandabschnitte) können in einem Einführbereich eine Keilform definieren. Selbstverständlich ist es aber auch denkbar, dass die Nutböden oder Wandabschnitte wenigstens abschnittsweise parallel zueinander verlaufen.

Jeweils eine Nut kann seitliche Führungswände umfassen, wobei der Kragen im Einführbereich zwischen den Führungswänden aufnehmbar und entlang führbar ist. Bei der Verwendung von U-förmigen Nuten entsprechen die Führungswände dabei den Nutseitenwänden.

Weiter kann es vorteilhaft sein, wenn die Positioniereinheit derart ausgebildet ist, dass der Kragen bezogen auf die Bewegungsrichtung der Kammerteile auf einer Seite frei liegt und auf der anderen Seite durch einen Anschlag abgestützt oder abstützbar ist. Durch diese nur einseitige Abstützung kann eine erhebliche Vereinfachung der Konstruktion erreicht werden. Diese Anordung kann auch für konventionelle Vorrichtungen insbesondere mit horizontalem Schliess- und Öffnungsmechanismus Vorteile haben. Führungsmittel, die den Kragen klemmend an seinem Aussenumfang erfassen, sind nicht zwingend erforderlich.

Besonders vorteilhaft kann es sein, wenn die Führungswände derart ausgestaltet sind, dass der Kragen der Kapsel in der Zwischenposition nur auf einer Seite durch eine Führungswand zum Stabilisieren der horizontalen Lage abgestützt ist. Ein derartiger Anschlag kann durch die Verwendung U-förmiger Nuten gebildet werden. Bevorzugt kann es dabei sein, wenn die dem Aufnahmebecher zugewandte Kragenseite in der Zwischenposition an die entsprechende Führungswand (nachfolgend auch "becherseitige Führungswand" genannt) anschlägt oder abgestützt ist. In dieser Anordnung lässt sich die Formgebung der Kapsel auf vorteilhafte Art und Weise nutzen. Denn da der Schwerpunkt der Kapsel neben dem Kragen liegt, würde eine sich in horizontaler Lage befindliche Kapsel ohne becherseitige Führungswand eigentlich in Richtung des Bechers kippen. Selbstverständlich eignet sich die Vorrichtung aber auch für völlig symmetrische Kapseln, bei denen der Schwerpunkt in der vertikalen Ebene des Kragens liegt. In diesem Fall könnte gegebenenfalls ganz auf die seitliche Abstützung verzichtet werden.

In einer weiteren Ausführungsform kann an den Einführbereich ein der Zwischenposition zugeordneter Positionierbereich anschliessen, in dem eine der Führungswände eine Freistellung aufweist, wodurch der Kragen beim Schliessvorgang an der entsprechenden Führungswand vorbeiführbar ist. Durch diese Freistellung liegt der Kragen bezogen auf die Bewegungsrichtung der Kammerteile auf dieser Seite frei. Vorzugsweise kann eine deckelseitige Führungswand (d.h. die der becherseitigen Führungswand gegenüberliegende Führungswand) mit der Freistellung versehen sein.

Mit anderen Worten kann sich die Führungswand auf den Durchmesser bzw. Aussenumfang des Kragens erweitern.
Die Freistellung in der entsprechenden Führungswand kann zum Kragen komplementär ausgestaltet sein.

Die Freistellung kann eine zylindrische oder kegelförmige Mantelfläche bilden. Die Mantelfläche kann auch durch einen schiefen Zylinder oder einen schiefen Kegel vorgegeben sein.

Vorteilhaft kann es weiter sein, wenn der Wandabschnitt im Positionierbereich eine zylindrische, zum Kragen komplementär ausgestaltete Mantelfläche bildet, über die der Kragen form- und kraftschlüssig haltbar ist. Somit kann eine präzise Zwischenposition für die Kapseln festgelegt werden.

Weiterhin kann es vorteilhaft sein, wenn ein Kammerteil feststehend und das andere Kammerteil beweglich in der Vorrichtung angeordnet ist und wenn die Positioniereinheit zusammen mit dem beweglichen Kammerteil vorzugsweise in horizontaler Richtung translatorisch verfahrbar ist.

Das feststehende Kammerteil kann eine Kavität zur wenigstens teilweisen Aufnahme der Kapsel aufweisen. In der Kavität können Penetrationsmittel angeordnet sein, die auf einen Kapselboden der Kapsel angreifen und diesen wenigstens in der Extraktions- bzw. Schliessposition ganz durchdringen. Die Penetrationsmittel können dabei für eine erste Phase der Schliessbewegung einen Anschlag für den Kapselboden zum Herausstossen der Kapsel aus der Positioniereinheit beim Schliessvorgang bilden, wobei die Kapsel bereits stützend erfasst sein kann. Die Penetrationsmittel können zusätzlich Mittel zum Durchleiten des Extraktionsmittels durch die geschlossene Extraktionskammer und durch die Kapsel aufweisen.

An der Positioniereinheit kann weiter wenigstens ein Mitnehmer angeordnet sein, mit dem die Kapsel beim Öffnen der Kammerteile aus einer durch eines der Kammerteile gebildete Kavität entfernbar ist.

An die Freistellung kann eine Auflaufflanke anschliessen, an die der Kragen beim Schliessvorgang entlang fahrbar ist. Vorteilhaft kann es dabei sein, wenn an einem Ende der Auflaufflanke eine Absenkung zur Bildung des Mitnehmers angeordnet ist, über welche der Kragen zum Herausziehen der Kapsel in der Bewegungsrichtung der Kammerteile beim Öffnungsvorgang erfassbar ist.

Ein weiterer Aspekt der Erfindung betrifft eine Anordnung zum Zubereiten eines flüssigen Lebens- oder Genussmittels mit einer Kapsel und der vorgängig beschrieben Vorrichtung.

Weitere Vorteile und Einzelmerkmale der Erfindung ergeben sich aus der nachfolgenden Beschreibung von Ausführungsbeispielen und Aus den Zeichnungen.

Es zeigen:
- Figur 1:: Eine perspektivische Darstellung einer erfindungsgemässen Vorrichtung in Offenstellung mit einer Kapsel in Zwischenposition,
- Figur 2:: einen Ausschnitt der Darstellung gemäss Figur 1, jedoch mit entfernter vorderer Supporthälfte,
- Figur 3: eine perspektivische Schnittdarstellung der Vorrichtung gemäss Figur 1 ohne Kapsel,
- Figur 4:: eine Positioniereinheit der Vorrichtung (vergrösserte Detaileinsicht aus Figur 3),
- Figur 5:: eine Draufsicht auf die Vorrichtung gemäss Figur 1, jedoch ohne Kapsel,
- Figur 6:: ein Längsschnitt durch die Vorrichtung gemäss Figur 1, vor dem Einführen der Kapsel,
- Figur 7:: eine Detailansicht aus Figur 5 mit einer vergrösserten Darstellung einer Positioniereinheit,
- Figur 8:: die Positioniereinheit gemäss Figur 7 im Längsschnitt,
- Figur 9a:: einen Querschnitt durch die Vorrichtung (Schnittebene m-m gemäss Figur 7),
- Figur 9b:: einen weiteren Querschnitt mit hälftiger Darstellung der Vorrichtung (Schnittebene k-k gemäss Figur 7),
- Figur 9c:: der Querschnitt gemäss Figur 9a, jedoch mit eingelegter Kapsel in leicht verkleinerter Darstellung,
- Figur 9d:: das Detail A aus Figur 9c,
- Figur 9e:: ein einer Supporthälfte der Vorrichtung zugeordneter Teil der Positioniereinheit in der Schnittdarstellung gemäss Figur 9b/9c in stark vergrösserter Darstellung,
- Figur 9f:: das Detail aus Figur 4 in nochmals vergrösserter Darstellung,
- Figur 10:: die Vorrichtung gemäss Figur 1 in einer Draufsicht,
- Figur 11:: die Vorrichtung gemäss Figur 1 in einem Längsschnitt,
- Figur 12:: einen Längsschnitt durch die Vorrichtung nach einer ersten Schliessbewegung,
- Figur 13:: einen Längsschnitt durch die Vorrichtung nach einer zweiten Schliessbewegung,
- Figur 14:: einen Längsschnitt durch die Vorrichtung nach einer dritten Schliessbewegung,
- Figur 15:: einen Längsschnitt durch die Vorrichtung nach Abschluss der Schliessbewegung (Schliess- oder Extraktionsposition),
- Figur 16:: die Vorrichtung in der Stellung gemäss Figur 14 in einer anderen Schnittdarstellung,
- Figur 17:: das Detail B aus Figur 16 in stark vergrösserter Darstellung,
- Figur 18:: einen Längsschnitt durch die Vorrichtung nach einer ersten Öffnungsbewegung,
- Figur 19:: die Vorrichtung nach Wiederherstellung der Offenstellung mit einer herunterfallenden Kapsel,
- Figur 20:: die Vorrichtung gemäss Figur 19 in einer horizontalen Schnittdarstellung,
- Figur 21:: das Detail C aus Figur 20 in stark vergrösserter Darstellung,
- Figur 22:: eine perspektivische Darstellung eines einer Supporthälfte zugeordneten Bauteils für die Positio- niereinheit gemäss einem zweiten Ausführungsbeispiel,
- Figur 23:: einen Querschnitt durch das Bauteil gemäss Figur 22 in stark vergrösserter Darstellung,
- Figur 24:: ein weiteres Bauteil für eine Positioniereinheit in einer perspektivischen Darstellung,
- Figur 25:: einen Querschnitt durch das Bauteil gemäss Figur 24, und
- Figur 26:: eine Positioniereinheit für eine Vorrichtung gemäss einem alternativen Ausführungsbeispiel mit einer alternativen Kapsel in der Zwischenposition.

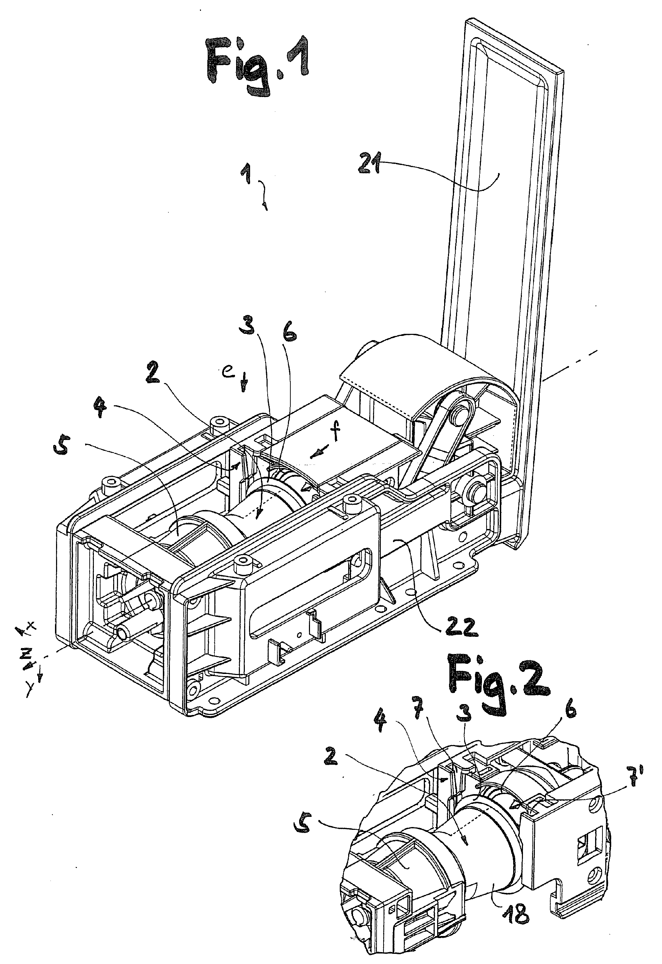

Die Figuren 1 und 2 zeigen eine als Modul gestaltete erfindungsgemässe Vorrichtung 1, die beispielsweise in eine Kaffeemaschine eingebaut werden kann. Mit einer derartigen Vorrichtung kann der Inhalt einer Kapsel 2 enthaltend Kaffeepulver extrahiert werden. Selbstverständlich kann die Kapsel auch anderes Verpackungsgut enthalten, insbesondere z.B. lösbare Trockensubstanzen. Die Kapsel 2 besteht aus einem Kapselkörper, der vorzugsweise aus einem Kunststoffmaterial wie z.B. Polypropylen besteht und in einem Tiefziehverfahren oder in einem Spritzgussverfahren hergestellt werden kann. Der Kapselkörper weist ein topf- oder becherförmiges Teil (Aufnahmebecher) auf. An diesen Aufnahmebecher 18 schliesst ein mit 3 bezeichneter Kragen an, der ein offenes Ende des Kapselkörpers definiert. Die Kapsel ist mit einer Deckelfolie verschlossen, die in der Regel ebenfalls aus Kunststoff besteht. Die nachstehend beschriebene Vorrichtung eignet sich aber grundsätzlich für alle Arten und Formen von Portionsverpackungen, die mit Kragen versehen sind.

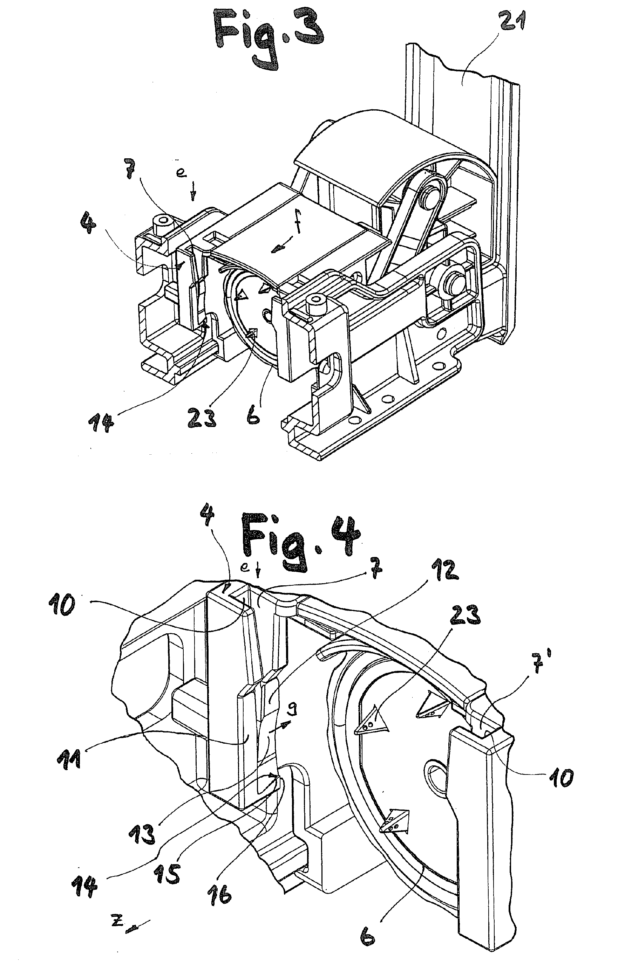

Die Vorrichtung 1 verfügt über zwei Kammerteile 5 und 6, die in axialer Richtung z relativ zu einander verschiebbar sind. Beim vorliegenden Ausführungsbeispiel ist das als Verschlussteil ausgebildete Kammerteil 6 bewegbar, während das andere Kammerteil 5 feststehend in der Vorrichtung 1 angeordnet ist. Das Kammerteil 5 ist als Kapselaufnahme mit einer Kavität 19 ausgestaltet, in die die Kapsel 2 aufnehmbar ist. Die Kapsel 2 ist mit Hilfe einer Positioniereinheit 4 in einer Einlegeposition zwischen den von einander beabstandeten Kammerteilen 5 und 6 in der Offenstellung positioniert. Das bewegliche Kammerteil 6 ist verschiebbar zwischen zwei Supporthälften 22 des Moduls gelagert. Mit x, y und z ist ein kartesisches Koordinatensystem angedeutet. Mit z ist eine axiale Richtung festgelegt. In dieser Richtung erfolgt der Schliess- und Öffnungsvorgang. Die Schliessbewegung wird manuell durch Betätigen eines Schwenkhebels 21 bewirkt. Die Vorrichtung 1 ist vorteilhaft in horizontaler Ausrichtung in eine entsprechende Maschine eingebaut. Eine derartige Einbauart ermöglicht es, dass die Kapsel 2 durch Schwerkraft auf einfache Art und Weise in die Einlegeposition gebracht werden kann. Jedes der Kammerteile 5 und 6 verfügt über Mittel zum Penetrieren der Kapsel und zum Durchleiten des Extraktionsmittels durch die Kapsel. Derartige Penetrationsmittel sind beispielsweise aus der WO 2008/023057 A2 bekannt geworden. Die dem feststehenden Kammerteil 6 zugeordneten Penetrationsmittel 23 sind in den Figuren 3 und insbesondere 4 besonders gut erkennbar. Mit den Penetrationsmittel 23 lässt sich das folienartige Deckelteil der Kapsel besonders einfach penetrieren.

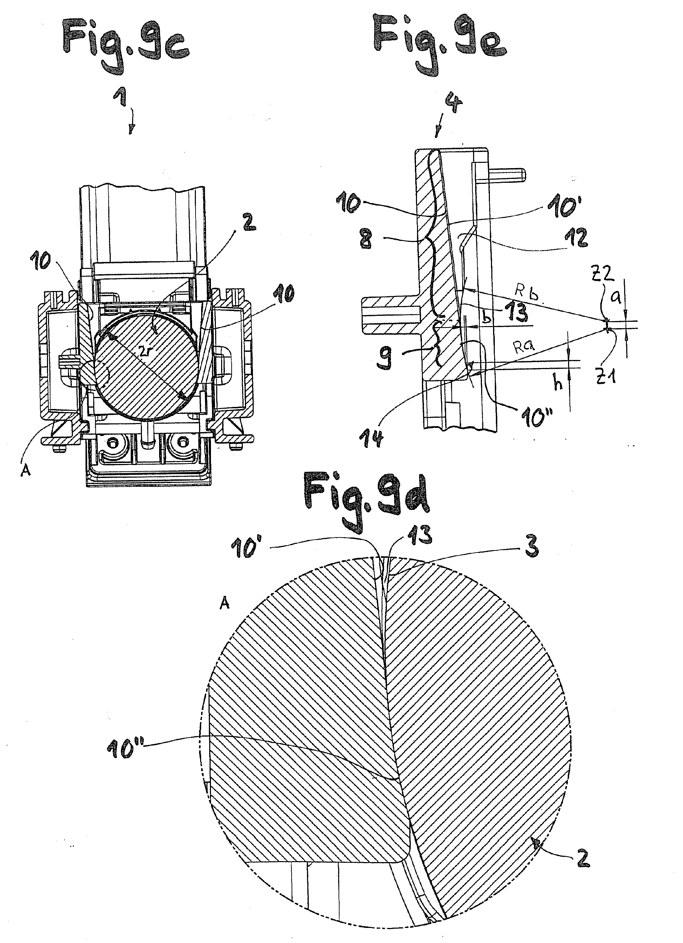

Aus den Figuren 3 und 4 geht unter anderem hervor, dass die Positioniereinheit 4 auf einer vertikalen Ebene liegende Führungsmittel zum Führen der Kapsel an ihrem Kragen in die Zwischenposition aufweist. Die Führungsmittel werden durch einander zugewandte U-förmige Nuten 7 und 7' gebildet, die eine vorteilhafte Führung des Kragens sicherstellen. Die Nut besteht aus Nutseitenwänden und einem Nutboden. Dabei bildet eine Nutseitenwand eine becherseitige Führungswand 11 und die andere Nutseitenwand eine deckelseitige Führungswand 12. Die einander zugewandten Nutböden bilden sich verjüngende Wandabschnitte 10 und 10', zwischen denen der Kragen am Aussenumfang in der Zwischenposition in einem Positionierbereich klemmend erfassbar ist (vgl. auch nachfolgende Figur 9c).

Die Positioniereinheit 4 ist fest mit dem Kammerteil 6 verbunden und bildet mit diesem eine Einheit. Diese Einheit ist in z-Richtung hin und her verfahrbar. Die Schliessrichtung ist mit dem Pfeil f angedeutet (Figur 3).

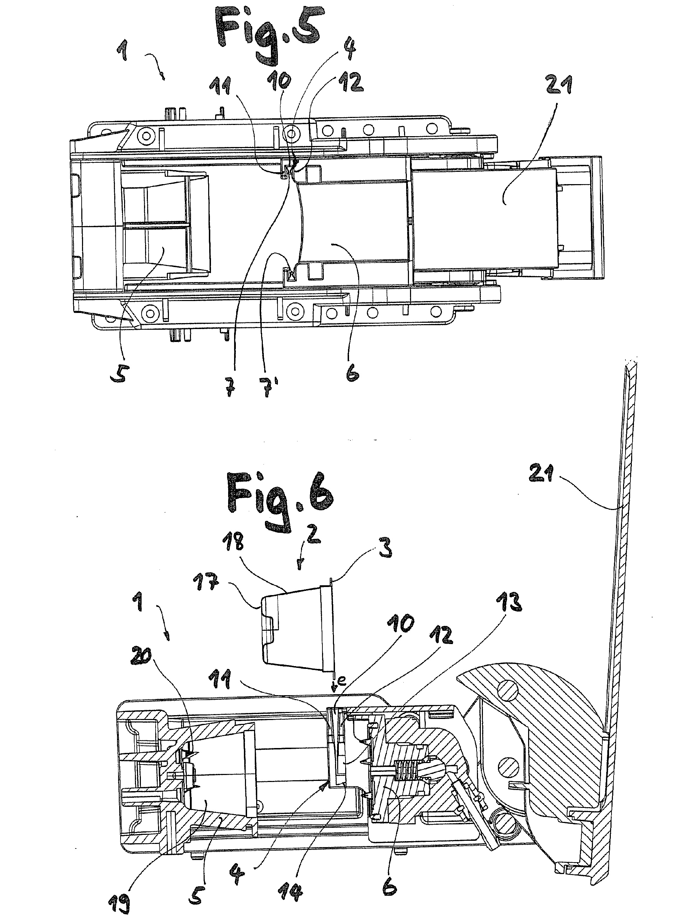

Aus der detaillierten Darstellung der Positioniereinheit 4 in Figur 4 ist erkennbar, dass der (hier nicht dargestellte) Kragen der Kapsel über einen Einführbereich zwischen den Führungswänden 11 und 12 geführt ist. Unten am Einführbereich schliesst ein Positionierbereich an, in dem der Kragen an seinem Aussenumfang klemmend zwischen den Wandabschnitten 10 erfasst ist. In diesem Positionierbereich ist der Kragen jedoch nur noch auf einer Seite abgestützt. Der jeweilige Anschlag wird dabei durch die Führungswand 11 gebildet. Auf der gegenüberliegenden Seite liegt der Kragen bezogen auf die Bewegungsrichtung der Kammerteile frei. Hierzu ist an der Führungswand 12 eine Freistellung 13 angeordnet, wodurch der Kragen beim Schliessvorgang an der Führungswand 12 vorbeiführbar ist. Das Vorbeiführen erfolgt dabei in g-Richtung. Die Freistellung 13 in der Führungswand 12 ist komplementär zum Kragen ausgestaltet. Unterhalb der Freistellung 13 ist ein Mitnehmer 14 erkennbar, der eine in g-Richtung wirkende Auflaufflanke 15 aufweist. Die Auflaufflanke 15 endet in einer Absenkung 16, die zum Herausziehen der Kapsel aus der Kavität einen Anschlag bildet. Der genaue Aufbau und die Wirkungsweise des Schliess- und Öffnungsmechanismus der Vorrichtung wird nachfolgend anhand der Figuren 5 bis 21 im Detail erläutert.

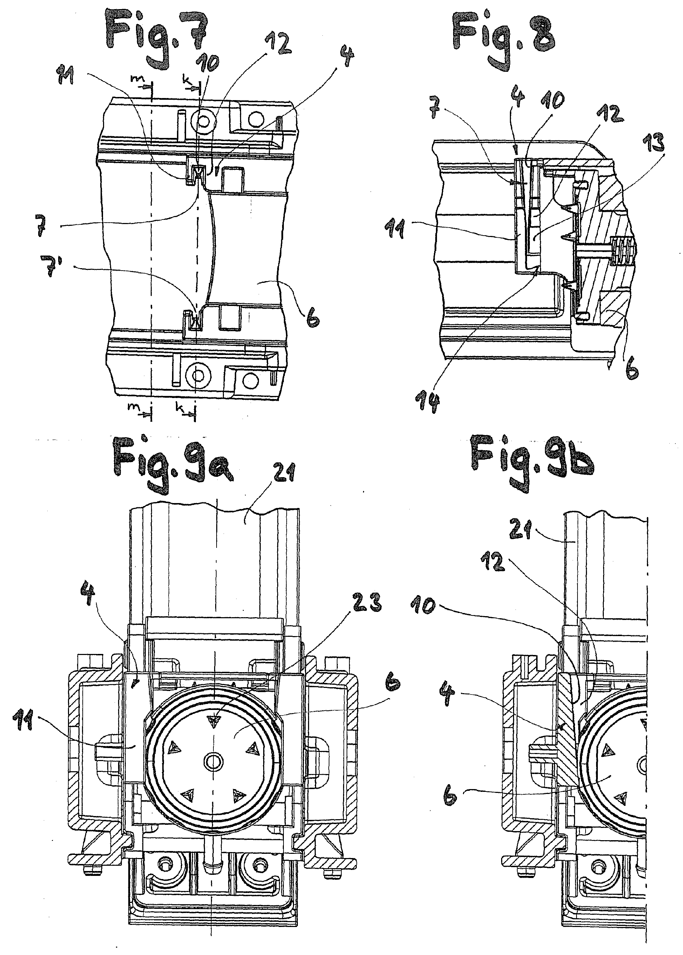

Aus der Draufsicht gemäss Figur 5 (siehe auch Figur 7) ist erkennbar, dass die Positioniereinheit 4 zwei einander zugewandte U-förmigen Nuten 7 und 7' aufweist. Die Nuten sind spiegelbildlich ausgestaltet. Jede Nut umfasst Nutseitenwände, die die seitlichen Führungswände 11, 12 bilden, wobei der (nicht dargestellte) Kragen wenigstens im Einführbereich zwischen den Führungswänden 11, 12 aufnehmbar und entlang führbar ist. Der jeweilige Nutboden bildet den Wandabschnitt 10 zum klemmenden Erfassen des Kragens in der Zwischenposition an seinem Aussenumfang.

Wie aus Figur 6 hervorgeht, kann die Kapsel 2 von oben her in die Vorrichtung 1 eingelegt werden. In dieser Seitenansicht verjüngt sich die Nut 7 in Einführrichtung e. Die beiden einander gegenüber liegenden Seitenwände 11 und 12 sind ersichtlicherweise im Einführbereich keilförmig ausgerichtet. Dieser erste Abschnitt der Nut 7 hat den Zweck, ein möglichst einfaches Einführen der Kapsel zu ermöglichen. Darunter folgt ein Bereich (Positionierbereich), in dem Seitenwände 11 und 12 parallel zueinander verlaufen.

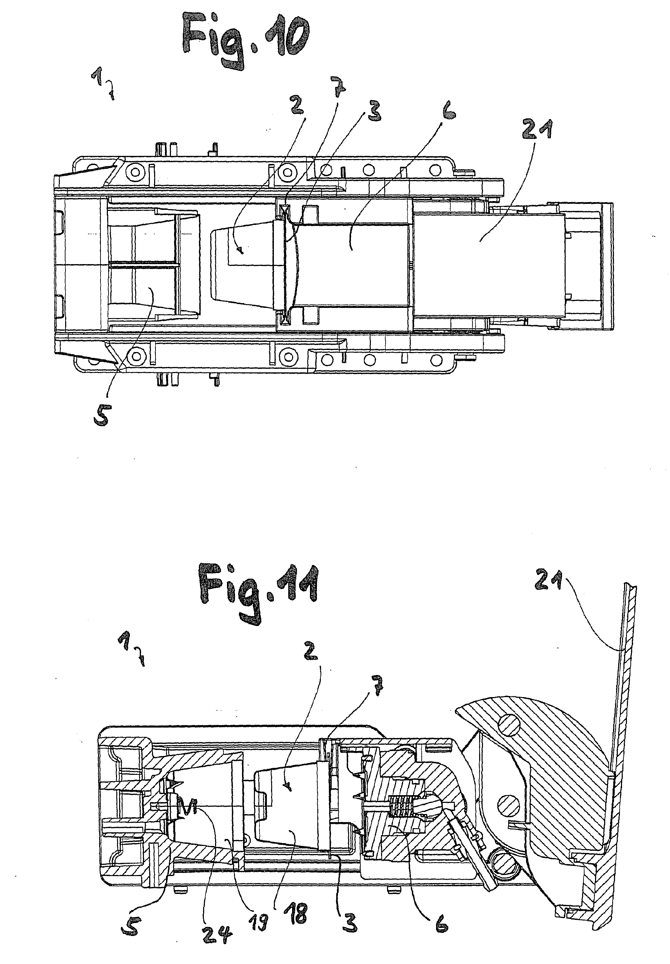

Die zuerst keilförmige und dann parallele Ausgestaltung der Seitenwände 11 und 12 ist in Figur 8 deutlich erkennbar. Durch die vertikale Ausrichtung der Seitenwand 11 im Positionierbereich ist sichergestellt, dass sich eine eingelegte Kapsel präzise in der horizontalen Lage befindet (siehe auch Figur 11). Der Kragen 3 ist in der Zwischenposition nur auf einer Seite, nämlich durch die Führungswand 11, zum Stabilisieren der horizontalen Lage abgestützt.

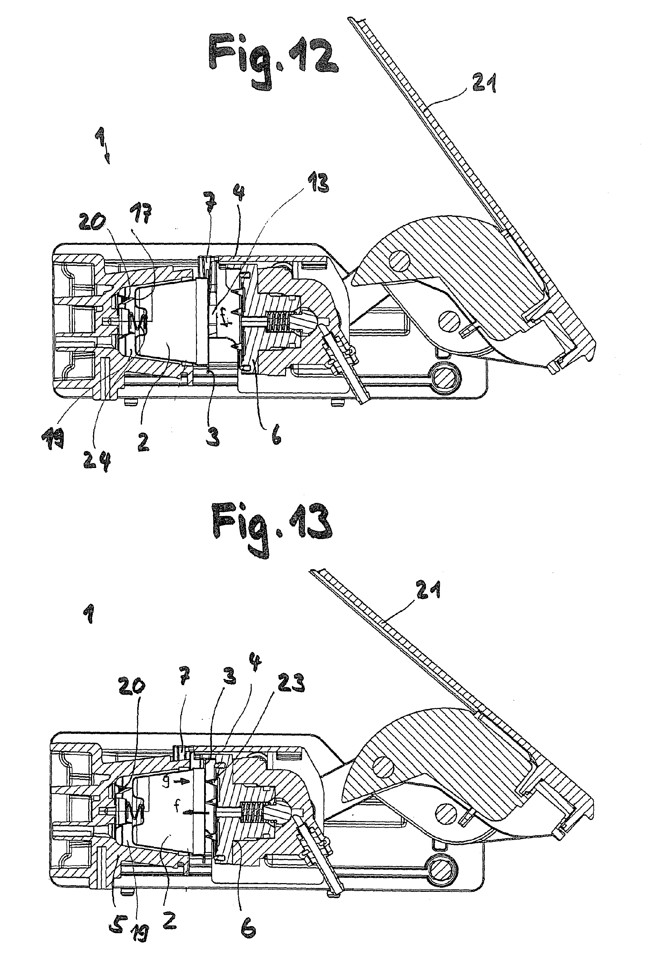

Figur 9a zeigt die becherseitige Führungswand 11 in einer Vorderansicht. Die Führungswand 11 weist einen etwa dem Positionierbereich zugeordneten unteren, zurückversetzten Bereich auf. Durch diese Ausgestaltung der Führungswände ist sichergestellt, dass das gegenüberliegende Kammerteil (5; siehe z.B. Fig. 13) an der Positioniereinheit 4 vorbeiführbar ist.

Die Figuren 9a, 9b und 9e zeigen, dass der Nutboden bzw. die Wandabschnitte 10 im Einführbereich als Keilflächen ausgebildet ist, die schräg nach unten sich verjüngen. Weiterhin ist die Formgebung der hinteren bzw. deckeseitigen Führungswand 12 erkennbar. Die Führungswand 12 ist in der Vorderansicht - bis auf die Freistellung 13 - etwa deckungsgleich mit der vorderen bzw. becherseitigen Führungswand (11; Figur 9a) ausgestaltet. Figur 9c zeigt eine in der Vorrichtung eingelegte Kapsel 2. In dieser Zwischenposition ist der Kragen an seinem Aussenumfang zwischen den Wandabschnitten 10 klemmend erfasst. Der Aussenumfang des Kragens weist einen Durchmesser auf, der in Figur 9c mit 2r bezeichnet ist.

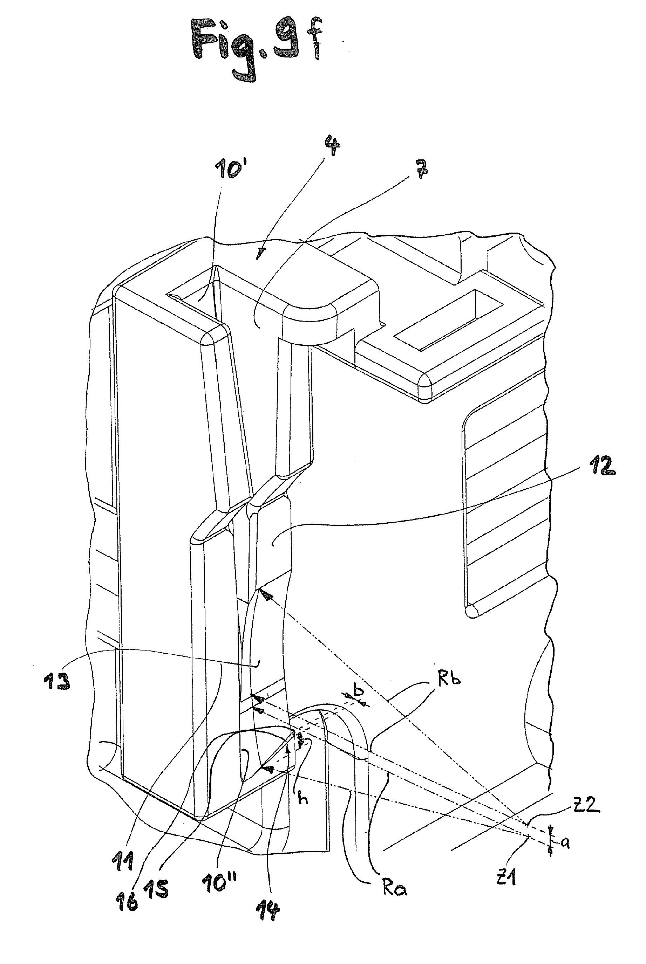

Aus der vermassten Schnittdarstellung (Figur 9e) ist die Ausgestaltung des Wandabschnitts 10 und der deckeseitigen Führungswand 12 der Positioniereinheit 4 deutlich erkennbar. Der Wandabschnitt 10 ist im Wesentlichen in zwei Bereiche aufgeteilt. Der erste Bereich, d.h. der Einführbereich ist mit 8 angedeutet. An diesen schliesst ein mit 9 bezeichneter Positionierbereich an. Im Einführbereich 8 ist der entsprechende Wandabschnitt mit 10' bezeichnet. Im Positionierbereich 9 ist der Wandabschnitt mit 10" bezeichnet. Der Wandabschnitt 10' verläuft ersichtlicherweise schräg nach unten und bildet mit dem (nicht gezeigten) gegenüberliegenden Wandbereich eine sich verjüngende Keilform. Der Wandabschnitt 10" im Positionierbereich ist im Querschnitt kreisförmig ausgebildet und bildet also eine zylindrische Mantelfläche zum kraft- und formschlüssigen Aufnehmen des Kragens. Der Zylinder des Wandabschnitts 10" ist durch den Radius Ra und die Zylinderachse Z1 vorgegeben. Figur 9d erlaubt eine detaillierte Ansicht der lagemässigen Fixierung einer Kapsel 2 in der Zwischenposition. In dieser Detaildarstellung ist etwa erkennbar, dass die Freistellung 13 in der Draufsicht den Kragen 3 in axialer Richtung umhüllt. Figur 9e zeigt weiter die Ausgestaltung der Führungswand 12. Die Führungswand 12 enthält ersichtlicherweise eine zylindrische Freistellung 13. Dieser Zylinder ist durch den Zylinderradius Rb und Zylinderachse Z2 vorgegeben. Ersichtlicherweise sind die beiden genannten Zylinder in einem Abstand a voneinander geordnet. Die beiden Zylinder bzw. zylindrischen Mantelflächen sind sodann auch in Figur 9f deutlich erkennbar. Der Abstand a entspricht der Höhe h des Mitnehmers 14 (Breite des Mitnehmers mit b angedeutet). Für Kapseln mit einem Kragenradius r von z.B. 20.00 mm beträgt der Radius Ra beispielhaft 19,90 mm, während der Radius Rb zum Vorbeiführen des Kragens 20.07 mm beträgt. Zwischen der oberen zylindrischen Mantelfläche 13 für die Freistellung und der unteren zylindrischen Mantelfläche ist eine plane Fläche erkennbar, deren Höhe dem Abstand a entspricht.

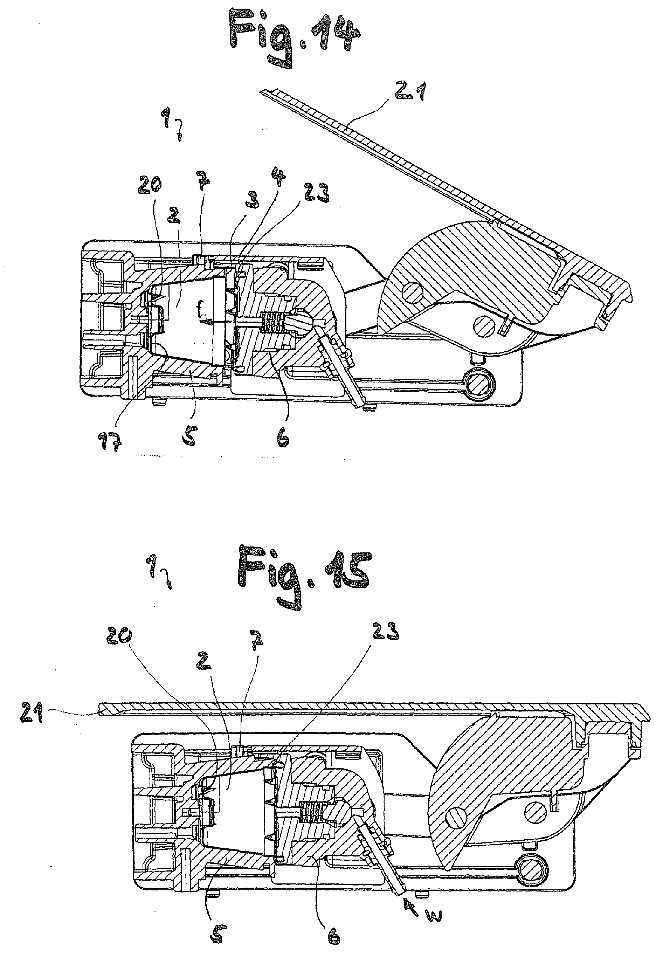

Die Figuren 10 und 11 zeigen die Vorrichtung 1 mit einer eingelegten Kapsel in der Zwischenposition. Die Figuren 12 bis 14 zeigen die Vorrichtung 1, bei der das Kammerteil 6 zusammen mit der Positioniereinheit 4 jeweils schrittweise in f-Richtung bewegt wurde. Figur 15 betrifft schliesslich die Schliessstellung, die hier gleichzeitig der Extraktionsstellung entspricht. Nach einem ersten Teilstück kommt der mit 17 bezeichnete Kapselboden mit den Spitzen der Penetrationsmittel 20 des feststehenden Kammerteil 5 in Berührung. Die Penetrationsmittel bilden damit einen Anschlag für eine erste Phase der Schliessbewegung für den Kapselboden zum Herausstossen der Kapsel 2 aus der Positioniereinheit 4. Dieser Teilschritt ist in Figur 13 dargestellt. Wird nun das Kammerteil 6 bzw. die Positioniereinheit 4 weiter in f-Richtung bewegt, dann bleibt die Kapsel 2 zeitweilig stehen, wodurch sich die Positioniereinheit 4 am Kragen 3 vorbeischiebt. Diese Relativbewegung ist in Figur 13 mit dem Pfeil g angedeutet. Dank der Freistellung in der deckelseitigen Führungswand kann die Kapsel 2 beim Bewegen der Kammerteile von der Offenstellung in die Schliessposition ohne Verformung des Kragens 3 aus der Zwischenposition von der Positioniereinheit 4 befreit werden. Nach weiterem Verschieben der Positioniereinheit 4 wird zunächst der Kapselboden 17 durch die Penetrationsmittel 20 und dann das Deckelteil durch die Penetrationsmittel 23 perforiert. Je nach Ausgestaltung der Kapsel und der Penetrationsmittel kann die Perforierung aber auch in umgekehrter Reihenfolge oder etwa gleichzeitig erfolgen. In Figur 13 ist die Kapsel 2 in der Kavität 19 des Kammerteils 5 aufgenommen. In der in Figur 15 gezeigten Stellung kann das Medium (z.B. heisses Wasser in Pfeilrichtung w) durch die Kapsel 2 durchgeleitet werden.

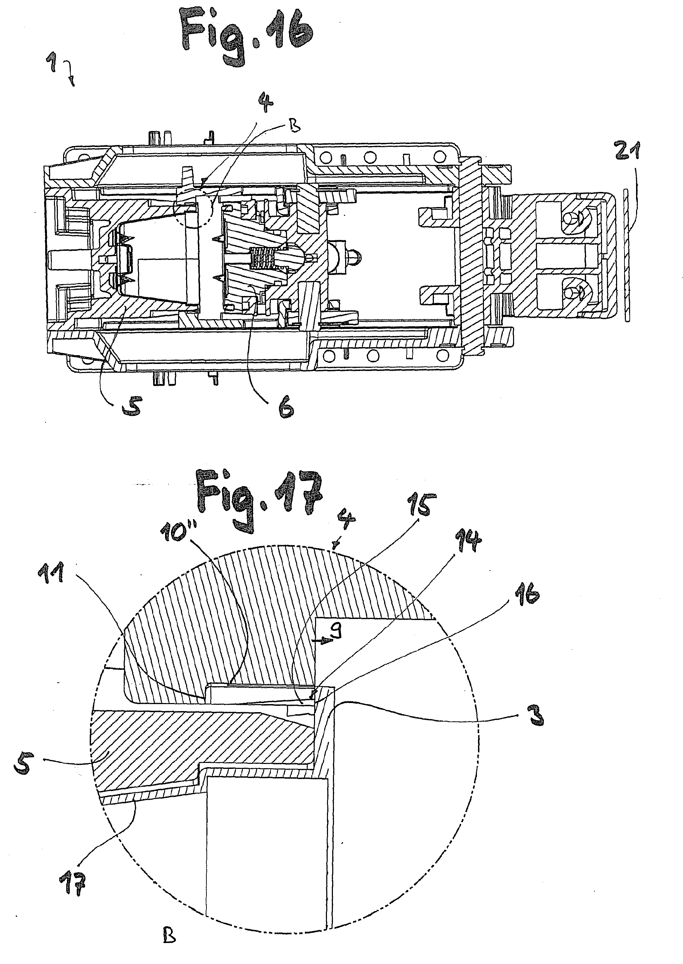

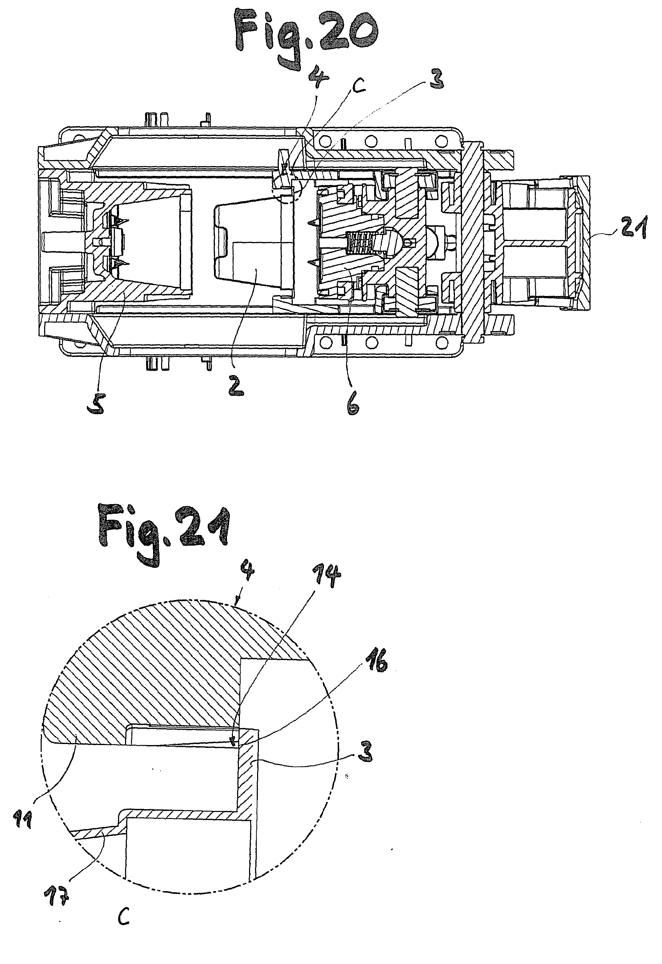

Figur 16 zeigt die eine Draufsicht der Vorrichtung in einer Schnittdarstellung in einer Stellung, die derjenigen von Figur 13 entspricht. Das Detail B (Figur 17) zeigt nochmals deutlich, dass es im Positionierbereich seitlich nur eine Führungswand 11 gibt. Die vorher U-förmige Nut ist in diesem Bereich offen, so dass der Kragen 3 hindernisfrei aus der Positioniereinheit 4 bei einer Bewegung in g-Richtung befreit werden kann. Die Freistellung im Bereich der deckelseitigen Führungswand ist ersichtlicherweise derart ausgestaltet, dass der Wandabschnitt 10" sich stufenlos in g-Richtung erstreckt. Figur 17 zeigt weiter eine dreieckförmige Auflaufflanke 15, an die der Kragen 3 beim Schliessvorgang entlang fahrbar ist. Am Ende der Auflaufflanke ist eine Absenkung 16 als Mitnehmer angeordnet, über die der Kragen zum Herausziehen der Kapsel beim Öffnungsvorgang erfassbar ist (siehe nachfolgende Figur 21).

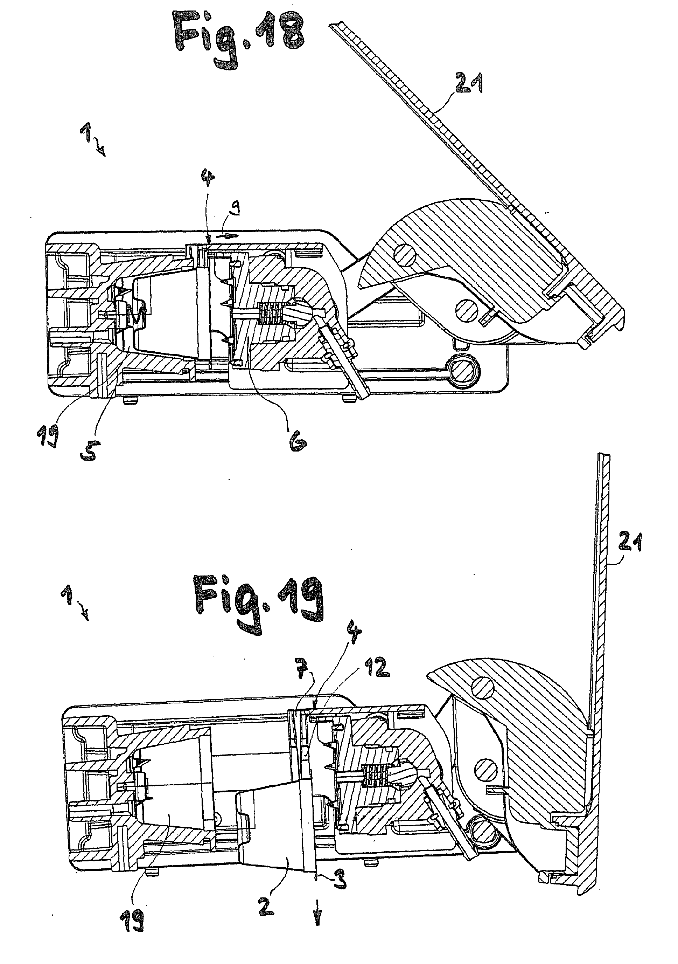

Nach Beendigen der Getränkezubereitung kann der Schwenkhebel 21 hochgeschwenkt und so der Öffnungsvorgang erwirkt werden. In den Figuren 18 ist die Vorrichtung 1 während dem Öffnungsvorgang dargestellt. In Figur 19 ist eine Offenstellung nach dem Hochschwenken gezeigt. Wie insbesondere aus Figur 19 hervorgeht, fällt die Kapsel 2 spätestens in der Offenstellung (oder beim Übergang in die Offenstellung) durch ihr Eigengewicht aus der Vorrichtung heraus (siehe auch Figur 20). Durch die besondere Gestaltung der Positioniereinheit 4 ist die Kapsel 2 auf einfache Art und Weise unter Schwerkrafteinwirkung entfernbar.

Die Absenkung 16 kann zum Herausziehen der Kapsel 2 aus der Kavität 11 verwendet werden. Wird nämlich beim Öffnungsvorgang die Positioniereinheit in g-Richtung bewegt, so stösst die Absenkung 16 an den Kragen 3 an und zieht so die Kapsel heraus (vgl. Figur 18). Dieser Mitnehmer 14 ist in Figur 21 sowie in der vorgängigen Figur 4 erkennbar.

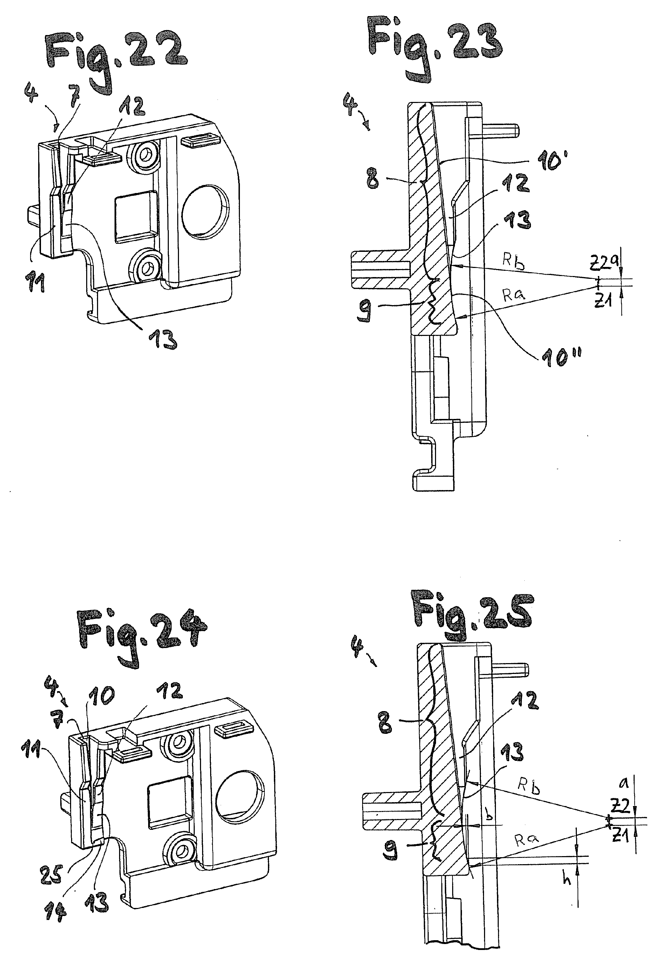

Wie aus den Figuren 22 und 23 hervorgeht, kann die Positioniereinheit 4 auch ohne Mitnehmer ausgeführt sein. Im dritten Ausführungsbeispiel gemäss den Figuren 24 und 25 ist ein zum ersten Ausführungsbeispiel alternativ ausgestalteter Mitnehmer 14 dargestellt. Dieser Mitnehmer 14 enthält - wie das erste Ausführungsbeispiel - eine Auflaufflanke 15 und eine Absenkung zum Vorgeben eines Anschlags zum Herausziehen des Kragens, jedoch weist die Positioniereinheit weiter eine am Ende der Nut 7 angeordnete Ausnehmung 25 auf, die eine Stufe vor der Auflaufflanke 15 bildet.

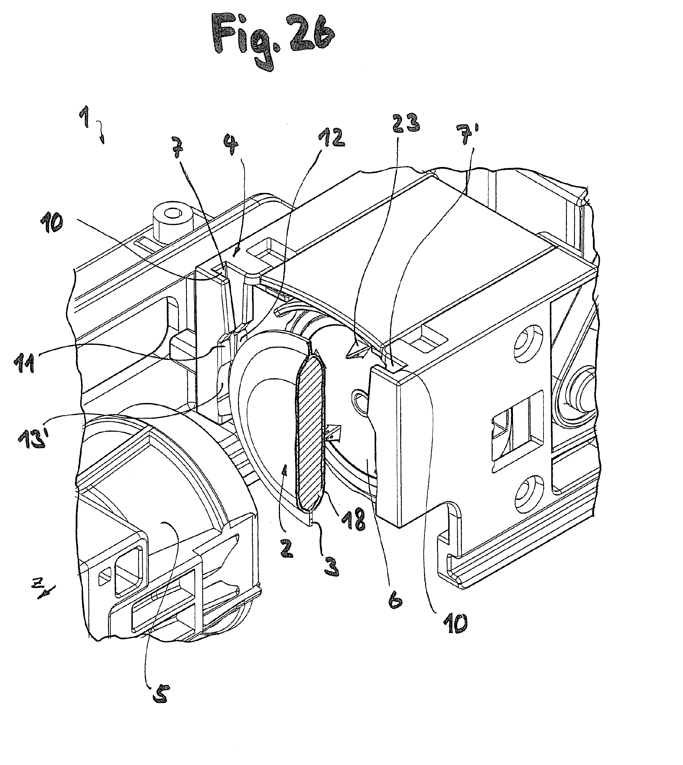

Figur 26 zeigt eine Positioniereinheit 4, bei der die Kapsel 2 in der Zwischenposition nur durch zwei sich verjüngende Wandabschnitte 10 klemmend erfasst ist. Der Kragen 3 liegt damit in der Zwischenposition bezogen auf die Bewegungsrichtung z auf jede Seite frei, d.h. es kann auf die seitliche Abstützung ganz verzichtet werden. Die Positioniereinheit 4 ist bis auf eine andere Ausgestaltung der mit 11 bezeichneten Führungswand im Wesentlichen gleich wie beim ersten Ausführungsbeispiel (vgl. Fig. 2) ausgestaltet. Die Führungswand 11 verfügt analog zur Führungswand 12 über eine Freistellung. Diese der Führungswand 11 zugeordnete Freistellung ist mit 13' bezeichnet. Die beiden Führungswände 11 und 12 sind spiegelbildlich ausgestaltet. Eine derartige Ausgestaltung eignet sich insbesondere für völlig symmetrische Kapseln, bei denen der Schwerpunkt in der vertikalen Ebene des Kragens 3 liegt. Selbstverständlich müssen die Kammerteile 5 und 6 an die geänderte Kapselform angepasst sein (nicht dargestellt).

## Patentansprüche

1. Vorrichtung zum Zubereiten eines flüssigen Lebens- oder Genussmittels aus einer in einer Kapsel enthaltenen Substanz mit einem umlaufenden Kragen mittels eines Mediums, bestehend aus
- zwei zur Aufnahme der Kapsel dichtend gegeneinander pressbaren Kammerteilen (5,6), die zwischen einer Offenstellung und einer Schliessstellung vorzugsweise horizontal relativ zueinander bewegbar sind,
- wobei die Kapsel (2) in der Offenstellung mittels einer Positioniereinheit (4) in einer Zwischenposition zwischen den Kammerteilen (5,6) haltbar ist und in der Schliessposition das Medium durch die Kapsel (2) durchleitbar ist, und
- wobei die Positioniereinheit (4) auf einer vorzugsweise vertikalen Ebene liegende Führungsmittel zum Führen der Kapsel in die Zwischenposition an ihrem Kragen (3) aufweist,
**dadurch gekennzeichnet, dass**
- die Führungsmittel zwei sich verjüngende Wandabschnitte (10) aufweisen, zwischen denen der Kragen (3) an einem Aussenumfang in der Zwischenposition in einem Positionierbereich (10'') klemmend erfassbar ist, und dass
- zum Befreien des Kragens vor dem Erreichen der Schliessposition die Positioniereinheit (4) derart ausgebildet ist, dass der Kragen (3) in der Zwischenposition bezogen auf die Bewegungsrichtung (z) der Kammerteile (5,6) wenigstens auf einer Seite freiliegt.

2. Vorrichtung nach Anspruch 1, **dadurch gekennzeichnet, dass** die Positioniereinheit (4) einen Einführbereich (8) aufweist, in dem die Kapsel (2) vor dem Erreichen der Zwischenposition an einem Kragen (3) in einander zugewandten U-förmigen Nuten (7) geführt ist.

3. Vorrichtung nach Anspruch 2, **dadurch gekennzeichnet, dass** jeweils eine Nut (7) seitliche Führungswände (11, 12) umfasst, wobei der Kragen (3) im Einführbereich zwischen den Führungswänden (11, 12) aufnehmbar und entlang führbar ist.

4. Vorrichtung nach einem der Ansprüche 1 bis 3, **dadurch gekennzeichnet, dass** die Positioniereinheit (4) derart ausgebildet ist, dass der Kragen (3) bezogen auf die Bewegungsrichtung (z) der Kammerteile (5,6) auf einer Seite freiliegt und auf der anderen Seite durch einen Anschlag abgestützt oder abstützbar ist.

5. Vorrichtung nach Anspruch 3 oder nach den Ansprüchen 3 und 4, **dadurch gekennzeichnet, dass** die Führungswände (11, 12) derart ausgestaltet sind, dass der Kragen (3) der Kapsel in der Zwischenposition nur auf einer Seite durch eine Führungswand (11) zum Stabilisieren der horizontalen Lage abgestützt ist.

6. Vorrichtung nach Anspruch 3 oder 5, **dadurch gekennzeichnet, dass** an den Einführbereich ein der Zwischenposition zugeordneter Positionierbereich anschliesst, in dem eine der Führungswände (12) eine Freistellung (13) aufweist, wodurch der Kragen (3) beim Schliessvorgang an der entsprechenden Führungswand (12) vorbeiführbar ist.

7. Vorrichtung nach Anspruch 6, **dadurch gekennzeichnet, dass** die Freistellung (13) in der entsprechenden Führungswand (12) zum Kragen (3) komplementär ausgestaltet ist.

8. Vorrichtung nach Anspruch 6 oder 7, **dadurch gekennzeichnet, dass** die Freistellung (13) eine zylindrische oder kegelförmige Mantelfläche bildet.

9. Vorrichtung nach einem der Ansprüche 1 bis 8, **dadurch gekennzeichnet, dass** der Wandabschnitt (10, 10') im Positionierbereich (9) eine zylindrische, zum Kragen (3) komplementär ausgestaltete Mantelfläche bildet, über die der Kragen (3) form- und kraftschlüssig haltbar ist.

10. Vorrichtung nach einem der Ansprüche 1 bis 9, **dadurch gekennzeichnet, dass** ein Kammerteil (5) feststehend und das andere Kammerteil (6) beweglich in der Vorrichtung angeordnet ist, und dass die Positioniereinheit (4) zusammen mit dem beweglichen Kammerteil (6) verfahrbar ist.

11. Vorrichtung nach Anspruch 10, **dadurch gekennzeichnet, dass** das feststehende Kammerteil (5) eine Kavität (19) zur wenigstens teilweisen Aufnahme der Kapsel (2) aufweist und dass in der Kavität auf einen Kapselboden (17) der Kapsel (3) angreifbare Penetrationsmittel (20) angeordnet sind, die für eine erste Phase der Schliessbewegung einen Anschlag für den Kapselboden zum Herausstossen der Kapsel (2) aus Positioniereinheit (4) beim Schliessvorgang bilden.

12. Vorrichtung nach einem der Ansprüche 1 bis 11, **dadurch gekennzeichnet, dass** an der Positioniereinheit (4) wenigstens ein Mitnehmer (14) angeordnet ist, mit dem die Kapsel (2) beim Öffnen der Kammerteile aus einer durch eines der Kammerteile gebildete Kavität (19) entfernbar ist.

13. Vorrichtung nach einem der Ansprüche 6 bis 8, **dadurch gekennzeichnet, dass** an die Freistellung (13) eine Auflaufflanke (15) anschliesst, an die der Kragen (3) beim Schliessvorgang entlang fahrbar ist.

14. Vorrichtung nach Anspruch 13, **dadurch gekennzeichnet, dass** an einem Ende der Auflaufflanke (15) eine Absenkung (16) als Mitnehmer angeordnet ist, über die der Kragen (3) zum Herausziehen der Kapsel in der Bewegungsrichtung (z) der Kammerteile beim Öffnungsvorgang erfassbar ist.

15. Anordnung zum Zubereiten eines flüssigen Lebens- oder Genussmittels mit einer Kapsel (2), die eine Substanz enthält und einen umlaufenden Kragen (3) aufweist, und mit einer Vorrichtung (1) zum Durchleiten eines Mediums durch die Kapsel zum Freisetzen der Substanz, bestehend aus zwei zur Aufnahme der Kapsel dichtend gegeneinander pressbaren Kammerteilen (5,6), die zwischen einer Offenstellung und einer Schliessstellung vorzugsweise horizontal relativ zueinander bewegbar sind, wobei die Kapsel (2) in der Offenstellung mittels einer Positioniereinheit (4) in einer Zwischenposition zwischen den Kammerteilen (5,6) haltbar ist und in der Schliessposition das Medium durch die Kapsel (2) durchleitbar ist, und wobei die Positioniereinheit (4) auf einer vorzugsweise vertikalen Ebene liegende Führungsmittel zum Führen der Kapsel in die Zwischenposition an ihrem Kragen (3) aufweist, **dadurch gekennzeichnet, dass** die Führungsmittel zwei sich verjüngende Wandabschnitte (10) aufweisen, zwischen denen der Kragen (3) an einem Aussenumfang in der Zwischenposition in einem Positionierbereich (10'') klemmend erfassbar ist, und dass zum Befreien des Kragens vor dem Erreichen der Schliessposition die Positioniereinheit (4) derart ausgebildet ist, dass der Kragen (3) bezogen auf die Bewegungsrichtung (z) der Kammerteile (5,6) wenigstens auf einer Seite freiliegt.
